# EUROPÄISCHE PATENTANMELDUNG

(11) **EP 4 023 910 A1**
(43) Veröffentlichungstag der Anmeldung: **06.07.2022**
(21) Anmeldenummer: 21214555.1
(22) Anmeldetag: 14.12.2021
(51) Int. Cl.: F16H 63/34

(54) **GETRIEBEEINRICHTUNG FÜR EIN ELEKTRISCH ANTREIBBARES FAHRZEUG**

(30) Priorität: 18.12.2020 DE 102020216286
(71) Anmelder: Valeo Siemens eAutomotive Germany GmbH, 91056 Erlangen (DE)
(72) Erfinder: Fürstenhöfer, Christian, 91056 Erlangen (DE); Haas, Bernd, 91056 Erlangen (DE)
(74) Vertreter: Novembre, Christophe Adelphe

(57) **Zusammenfassung**

Getriebeeinrichtung (1) für ein elektrisch antreibbares Fahrzeug, umfassend ein Getriebegehäuse (2), ein Parksperrenrad (5) und eine zum Blockieren des Parksperrenrads (5) ausgebildete, in dem Getriebegehäuse (2) aufgenommene Parksperre, einen elektromotorischen Parksperrenaktuator (7, 10, 21) zum Betätigen der Parksperre, wobei in dem Getriebegehäuse (2) eine das Innere des Parksperrenaktuators (7, 10, 21) mit dem Inneren des Getriebegehäuses (2) verbindende Druckausgleichsvorrichtung angeordnet ist, die eine Membran (15, 25) aufweist, die dazu ausgebildet ist, einen zwischen beiden Seiten der Membran (15, 25) vorhandenen Druckunterschied auszugleichen, wobei die Membran (15, 25) unter einem Winkel zur Horizontalrichtung angeordnet ist.

## Beschreibung

Die Erfindung betrifft eine Getriebeeinrichtung für ein elektrisch antreibbares Fahrzeug, umfassend ein Getriebegehäuse, ein Parksperrenrad und eine zum Blockieren des Parksperrenrads ausgebildete, in dem Getriebegehäuse aufgenommene Parksperre, und einen elektromotorischen Parksperrenaktuator zum Betätigen der Parksperre, wobei in dem Getriebegehäuse eine das Innere des Parksperrenaktuators mit dem Inneren des Getriebegehäuses verbindende Druckausgleichsvorrichtung angeordnet ist, die eine Membran aufweist, die dazu ausgebildet ist, einen zwischen beiden Seiten der Membran vorhandenen Druckunterschied auszugleichen.

In der WO 2017/216230 A1 wird eine Parkbremse beschrieben, die einen schwenkbaren Hebel zum Arretieren eines Parksperrenrads aufweist. Mittels eines steuerbaren federbelasteten Stößels kann ein Vorsprung des schwenkbaren Hebels in das Parksperrenrad eingerastet werden, um die Parkbremse zu arretieren.

Durch die Integration einer Parksperre in ein Getriebegehäuse kann Bauraum eingespart werden, der insbesondere im Hinblick auf den Einsatz der Getriebeeinrichtung in einer elektrischen Antriebseinrichtung eines Fahrzeugs knapp ist. Allerdings ergeben sich daraus besondere Herausforderungen wegen des Vorhandenseins von Schmiermitteln und höheren Temperaturen im Inneren des Getriebegehäuses. Es ist wichtig, dass das im Getriebegehäuse vorhandene Getriebeöl nicht in einen Parksperrenaktuator der Parksperre gelangt. Getriebeöl kann unter ungünstigen Umständen beim Vorhandensein eines Druckunterschieds zwischen dem Inneren des Parksperrenaktuators und dem Inneren des Getriebegehäuses in den Parksperrenaktuator gelangen. Wenn beispielsweise Unterdruck in dem Parksperrenaktuator herrscht, kann dieser dazu führen, dass Getriebeöl in den Parksperrenaktuator gesaugt wird.

Der Erfindung liegt die Aufgabe zugrunde, eine Getriebeeinrichtung anzugeben, bei der sichergestellt ist, dass kein Getriebeöl in den Parksperrenaktuator der Parksperre gelangt.

Zur Lösung dieser Aufgabe ist bei einer Getriebeeinrichtung der eingangs genannten Art erfindungsgemäß vorgesehen, dass die Membran unter einem Winkel zur Horizontalrichtung angeordnet ist.

Die Erfindung beruht auf der Erkenntnis, dass das Eindringen von Getriebeöl in den Parksperrenaktuator, d. h. in ein Gehäuse des Parksperrenaktuators, verhindert werden kann, wenn eine Druckausgleichsvorrichtung vorgesehen ist. Die Druckausgleichsvorrichtung ist so ausgebildet, dass sie einen Druckunterschied zwischen dem Inneren des Parksperrenaktuators und dem Inneren des Getriebegehäuses verhindert. Die Druckausgleichsvorrichtung dient als Belüftung für den Parksperrenaktuator. Da sie den Parksperrenaktuator mit dem Inneren des Getriebegehäuses verbindet, wird die Entstehung eines Druckunterschieds und somit auch das Einsaugen von Getriebeöl in das Gehäuse des Parksperrenaktuators verhindert.

Bei der erfindungsgemäßen Getriebeeinrichtung weist die Druckausgleichsvorrichtung eine Membran auf, die dazu ausgebildet ist, einen zwischen beiden Seiten der Membran vorhandenen Druckunterschied auszugleichen. Ein Ausgleich von Druckunterschieden zwischen dem Inneren des Parksperrenaktuators und dem Inneren des Getriebegehäuses erfolgt, ohne dass eine direkte Verbindung vorhanden ist. Die Membran ist luftdurchlässig, gleichzeitig verhindert sie das Eindringen von Öl oder Wasser. Sie ist somit wasser- und ölabweisend und undurchlässig für Wasser, Öl und andere flüssige oder feste Stoffe. Dadurch ergibt sich der weitere Vorteil, dass mit Ölnebel versehene Luft nicht aus dem Getriebegehäuse in das Gehäuse des Parksperrenaktuators gelangen kann. Somit ist sichergestellt, dass kein Öl in den Parksperrenaktuator eindringen kann, das ansonsten dessen Funktion beeinträchtigen könnte. Alternativ zu einer luftdurchlässigen Membran kann auch eine verformbare Membran vorgesehen sein. Bei einer derartigen nicht luftdurchlässigen Membran verändert sich das eingeschlossene Volumen durch eine Volumenänderung entsprechend den Druckverhältnissen. Bei einem Überdruck im Aktuator wird das Volumen durch die verformbare Membran vergrößert und der Überdruck reduziert. Bei einem Unterdruck im Aktuator wird das Volumen verkleinert und dadurch der Unterdruck erhöht. In beiden Fällen wird der Druck im Aktuator an den Umgebungsdruck, d.h. den Druck im Getriebegehäuse, angepasst.

Da die Membran unter einem Winkel zur Horizontalrichtung angeordnet ist, wird das Eindringen von Öl vermieden. Die Formulierung, dass die Membran unter einem Winkel zur Horizontalrichtung angeordnet ist, schließt eine horizontale Anordnung aus, so dass sichergestellt ist, dass sich kein Öl an der Membran ansammelt.

Bei der erfindungsgemäßen Getriebeeinrichtung wird es bevorzugt, dass der zwischen der Membran und der Horizontalrichtung gebildete Winkel größer als 10° ist. Weiter bevorzugt kann der Winkel größer als 20°, größer als 30° oder größer als 40° sein.

Es wird besonders bevorzugt, dass sich die Membran in Vertikalrichtung erstreckt.

Im Rahmen der Erfindung wird es bevorzugt, dass die Membran aus einem Kunststoffmaterial, insbesondere aus Polytetrafluorethylen (PTFE), hergestellt ist.

Die Membran der Druckausgleichsvorrichtung der erfindungsgemäßen Getriebeeinrichtung kann aus einem gegenüber Getriebeöl resistenten Material hergestellt sein.

Eine Variante der Erfindung sieht vor, dass die Membran kreisförmig ausgebildet ist.

Um einen noch besseren Schutz der Membran vor Getriebeöl sicherzustellen, kann die Membran mit einer Schutzkappe versehen sein. Die Schutzkappe ist nicht druckdicht, sie dient lediglich dazu, die Membran mechanisch vor Ölspritzern zu schützen. Insbesondere wird durch die Schutzkappe verhindert, dass sich Getriebeöl auf der Membran ansammelt.

Eine erste Variante der Erfindung sieht vor, dass die Membran an einer gegenüber einem die elektrischen Komponenten enthaltenden Teil des Parksperrenaktuators erhöhten Position im Inneren des Getriebegehäuses angeordnet ist. Somit kann die Membran geschützt werden, insbesondere wenn sich der Parksperrenaktuator mindestens teilweise in einem Ölreservoir befindet.

Gemäß einer Weiterbildung der ersten Variante kann die Membran an einem hohl ausgebildeten, im Betrieb nach oben weisenden verlängerten Abschnitt des Parksperrenaktuators angeordnet sein. Bei dieser Ausgestaltung weist der Parksperrenaktuator bzw. dessen Gehäuse einen sich im Betrieb, d.h. im eingebauten Zustand, nach oben erstreckenden verlängerten Abschnitt auf. Insbesondere dieser verlängerte Abschnitt befindet sich oberhalb des Niveaus des Getriebeöls, so dass die Membran nicht mit Getriebeöl beaufschlagt wird.

Es kann auch vorgesehen sein, dass ein Gehäuse des Parksperrenaktuators einen ersten Abschnitt aufweist, der elektrische Komponenten des Parksperrenaktuators umfasst, und der hohl ausgebildete, im Betrieb nach oben weisende verlängerte Abschnitt einen zweiten Abschnitt des Gehäuses des Parksperrenaktuators ausbildet, an dessen Ende die Membran angeordnet ist. Insbesondere sind der erste Abschnitt und der zweite Abschnitt miteinander fluidverbunden. Vorzugsweise sind der erste Abschnitt und der zweite Abschnitt integral ausgebildet.

Eine weitere alternative Ausgestaltung der ersten Variante sieht vor, dass die Membran an einer inneren Wand des Getriebes, insbesondere an einer inneren Wand des Getriebegehäuses, angeordnet ist und über eine Rohrleitung oder einen Schlauch mit den Parksperrenaktuator verbunden ist. Diese Variante weist den Vorteil auf, dass die Membran an einer beliebigen, geeigneten Stelle angeordnet werden kann. Die Verbindung zwischen der Membran und dem Parksperrenaktuator erfolgt über den Schlauch oder die zum Druckausgleich dienende Rohrleitung.

Eine zweite Variante der Erfindung sieht vor, dass die Membran an einer Axialseite des elektromotorischen Parksperrenaktuators angeordnet ist. Bei dieser Variante ist die Membran an der der Antriebswelle des Elektromotors gegenüberliegenden Seite angeordnet, an der sie nicht durch Getriebeölnebel beeinträchtigt werden kann.

Der Parksperrenaktuator kann sich in einem Ölreservoir des Getriebegehäuses befinden und die Membran kann so angeordnet sein, dass sie sich sowohl während des Fahrbetriebs als auch beim Parken oberhalb des Ölreservoirs befindet. Dadurch ist sichergestellt, dass die Membran in allen Betriebszuständen nicht durch Öl beeinträchtigt wird. Insbesondere ist das Ölreservoir ein Bereich des inneren Raums des Getriebes, in dem Öl gesammelt ist. Das Ölreservoir kann am untersten Teil des Getriebegehäuses ausgebildet sein.

Es kann auch vorgesehen sein, dass der Parksperrenaktuator sich auf einer Höhe gegenüber einem Boden des Getriebegehäuses befindet, die niedriger als die Höhe der Drehachse des Parksperrenrads gegenüber dem Boden des Getriebegehäuses ist. Insbesondere kann der Parksperrenaktuator sich mindestens teilweise zwischen dem Parksperrenrad und dem Boden des Getriebegehäuses befinden. Dadurch wird die mechanische Integration der Komponenten im Getriebe verbessert. Aber die Membran könnte durch Ölspritzer vom Parksperrenrad betroffen sein.

Es ist dann möglich, dass die Membran sich in einem Bereich zwischen dem Parksperrenaktuator und der Drehachse des Parksperrenrads befindet. Dadurch wird die Membran weniger stark Öltropfen von dem Parksperrenrad ausgesetzt.

Es kann auch sein, dass die Membran sich in einem Bereich oberhalb der Drehachse des Parksperrenrads befindet, d.h. in einem Bereich, der weiter als der Abstand zwischen der Drehachse des Parksperrenrads und dem Boden ist. Dadurch wird die Membran noch weniger stark Öltropfen von dem Parksperrenrad ausgesetzt.

Gemäß einer Weiterbildung der Erfindung kann die Membran gegenüber einer inneren Wand des Getriebegehäuses, insbesondere unmittelbar, liegen. Somit ist die Membran weiter vor Ölspritzern geschützt.

Weitere Vorteile und Einzelheiten der Erfindung werden nachfolgend anhand von Ausführungsbeispielen unter Bezugnahme auf die Zeichnungen erläutert. Die Zeichnungen sind schematische Darstellungen und zeigen:
- Fig. 1: ein erstes Ausführungsbeispiel einer erfindungsgemäßen Getriebeeinrichtung bei geöffnetem Getriebegehäuse;
- Fig. 2: ein zweites Ausführungsbeispiel einer erfindungsgemäßen Getriebeeinrichtung;
- Fig. 3: eine geschnittene Ansicht eines Details von Fig. 2;
- Fig. 4: ein drittes Ausführungsbeispiel einer erfindungsgemäßen Getriebeeinrichtung;
- Fig. 5: eine schematische geschnittene Ansicht von Fig. 1; und
- Fig. 6: eine schematische geschnittene Ansicht von Fig. 4.

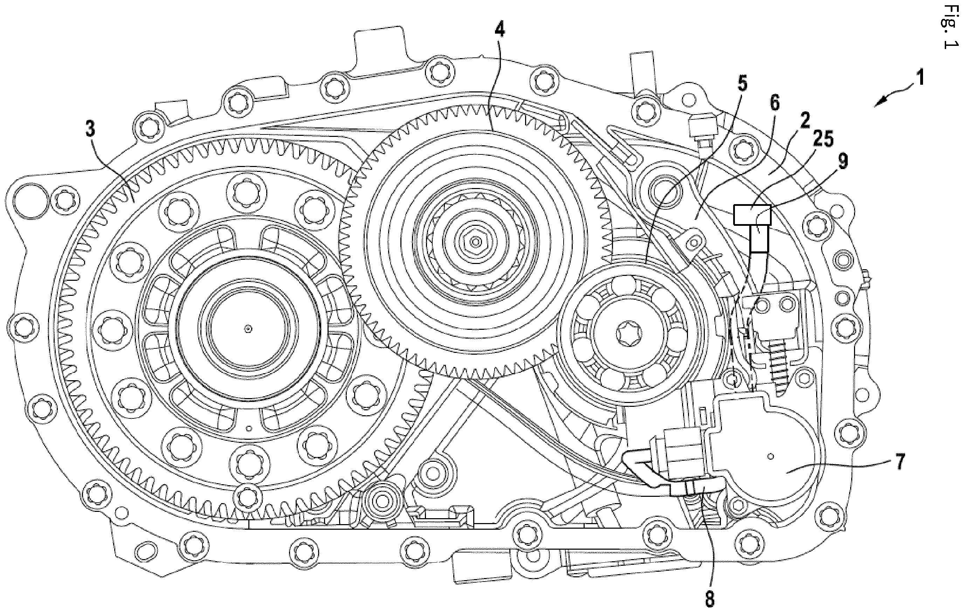

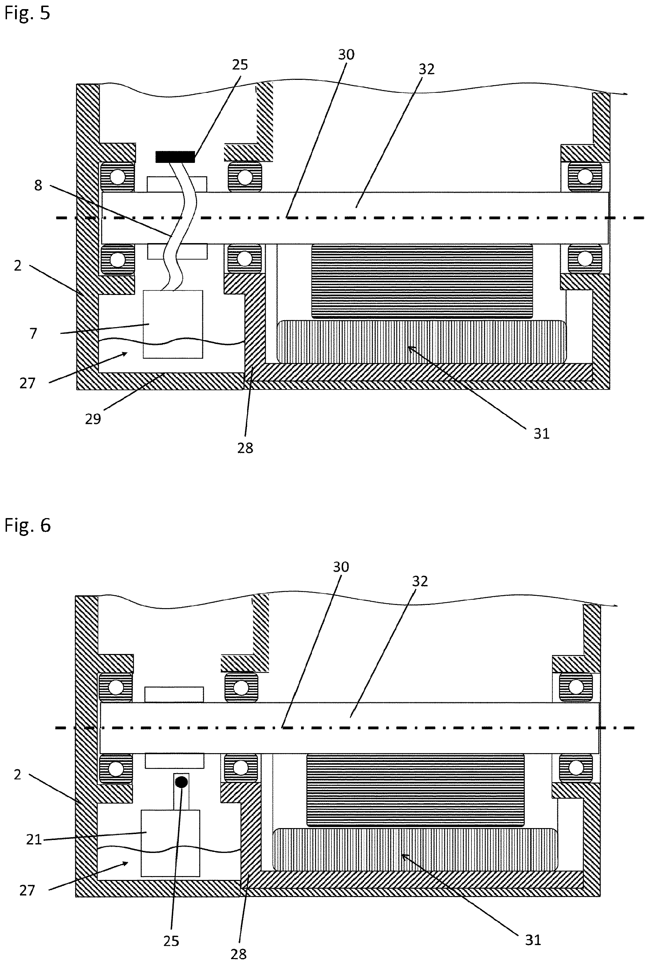

Fig. 1 zeigt ein Ausführungsbeispiel einer Getriebeeinrichtung 1 bei geöffnetem Getriebegehäuse 2 und Fig. 5 zeigt eine schematische geschnittene Ansicht von Fig. 1. Die Getriebeeinrichtung 1 umfasst ein angetriebenes Zahnrad 3, das mit einem oder mehreren weiteren Zahnrädern 4 gekoppelt ist. Das Zahnrad 4 kämmt mit einem in Fig. 1 von einem Kugellager verdeckten Zahnrad, das sich auf derselben Welle befindet, auf der das Parksperrenrad 5 angeordnet ist. Eine Parksperrenklinke 6 kann mittels eines elektromechanischen Parksperrenaktuators 7 in Eingriff mit dem Parksperrenrad 5 gebracht werden. Das Parksperrenrad 5 weist dazu an seinem Außenumfang entsprechende Ausnehmungen auf.

Zur Schmierung der Zahnräder 3, 4 ist die Getriebeeinrichtung 1 bis zu einem festgelegten Füllstand mit Getriebeöl 27 befüllt. In der Praxis befindet sich der Parksperrenaktuator 7 zumindest teilweise unterhalb des Getriebeölniveaus. Wie in Fig. 1 oder 5 gezeigt ist, befindet sich der Parksperrenaktuator 7 auf einer Höhe oberhalb eines Bodens 29 des Getriebegehäuses 2, die niedriger als die Höhe der Drehachse 30 des Parksperrenrads 5 oberhalb des Bodens 29 des Getriebegehäuses 2 ist.

Um zu vermeiden, dass durch Druckunterschiede im Inneren des Parksperrenaktuators 7 einerseits und dem Inneren des Getriebegehäuses 2 andererseits Getriebeöl in das Innere des Parksperrenaktuators 7 gesaugt wird, ist eine Druckausgleichsvorrichtung vorgesehen, die in diesem Ausführungsbeispiel als Rohrleitung 8 ausgebildet ist. Ein Ende der Rohrleitung 8 mündet in dem Gehäuse des Parksperrenaktuators 7, das andere Ende erstreckt sich bis zu einer erhöhten Position im Inneren des Getriebegehäuses 2, in der Nähe eines Lagerpunkts der Parksperrenklinke 6. An dem oberen Ende 9 der Rohrleitung 8 befindet sich eine schematisch dargestellte Membran 25, die einen gegebenenfalls zwischen ihren beiden Seiten vorhandenen Druckunterschied ausgleicht. Die Membran 25 ist unter einem Winkel zur Horizontalrichtung angeordnet. In dem dargestellten Ausführungsbeispiel ist sie näherungsweise senkrecht angeordnet. Die Membran 25 ist so weit oberhalb des Getriebeölniveaus angeordnet, dass auch unter besonderen Betriebsbedingungen, beispielsweise bei starker Längsneigung oder starker Querneigung des Fahrzeugs, kein Getriebeöl in den Bereich der Membran 25 gelangen kann. Insbesondere ist die Membran 25 in diesem Ausführungsbeispiel an der inneren Wand des Getriebegehäuses 2 angeordnet. Alternativ könnte die Membran 25 auch an einem anderen Ort in der Getriebeeinrichtung 1 angeordnet sein, zum Beispiel an einer anderen Komponente in der Getriebeeinrichtung 1.

Die schematische Zeichnung Fig. 5 zeigt einen Querschnitt durch das Ausführungsbeispiel von Fig. 1. Das Parksperrenrad 5 ist mit einem Motor 31 verbunden, der in einem Motorgehäuse 28 aufgenommen ist. Das Parksperrenrad 5 und der Motor 31 können sich dieselbe Motorwelle 32 teilen. Die Membran 25 befindet sich in einem Bereich oberhalb der Drehachse 30 des Parksperrenrads 5, wodurch die Gefahr verringert wird, dass Spritzer des Getriebeöls 27 auf die Membran 25 gelangen.

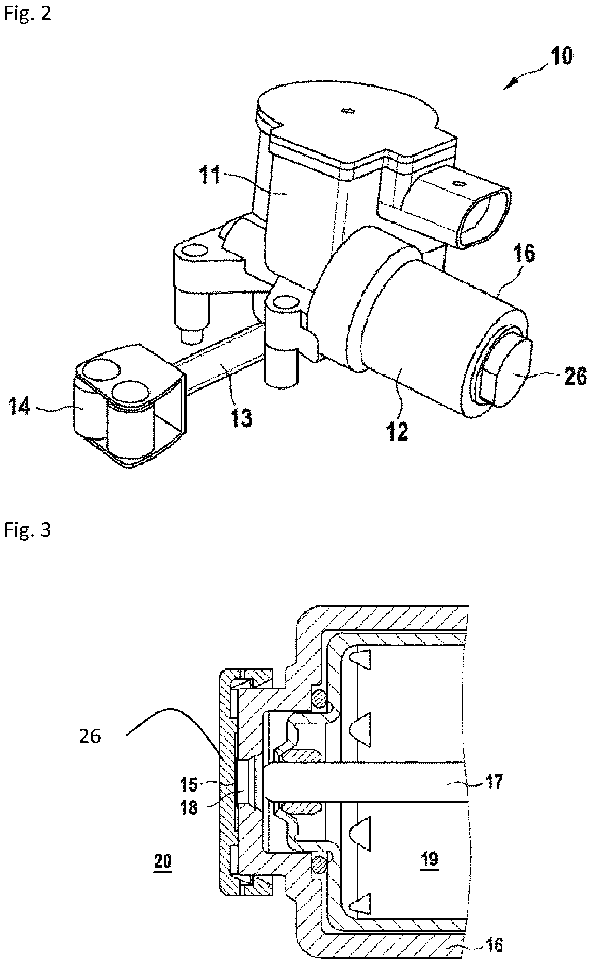

Fig. 2 zeigt als zweites Ausführungsbeispiel einen Parksperrenaktuator 10 in einer perspektivischen Ansicht, der Bestandteil einer Getriebeeinrichtung ist. Der Parksperrenaktuator 10 umfasst ein Gehäuse 11 und einen daran angebrachten elektromotorischen Antrieb 12, der eine als Spindel 13 ausgebildete Betätigungsvorrichtung antreibt. An dem freien Ende der als Betätigungsvorrichtung ausgebildeten Spindel 13 befindet sich eine Rolle 14, mit der eine Parksperrenklinke mit einem Parksperrenrad in Eingriff gebracht werden kann. An einem axialen Ende des Gehäuses des elektromotorischen Antriebs 12 des Parksperrenaktuators 10 befindet sich eine Druckausgleichsvorrichtung, die als Membran 15 ausgebildet ist. Der Parksperrenaktuator wird so in einem Getriebegehäuse angeordnet, dass die Membran 15 unter einem Winkel zur Horizontalrichtung angeordnet ist. In diesem Ausführungsbeispiel besteht die Membran 15 aus Polytetrafluorethylen (PTFE) und ist beständig gegenüber Getriebeöl. Die Membran 15 ist mit einer Schutzkappe 26 versehen und dadurch in der Ansicht von Fig. 2 verdeckt. Die Schutzkappe 26 schützt die Membran vor Ölspritzern.

Fig. 3 ist eine geschnittene Ansicht und zeigt den Bereich der Membran 15 in einem vergrößerten Maßstab. Der elektromotorische Antrieb 12 umfasst ein Gehäuse 16, in dem sich eine Antriebswelle 17 befindet. Die Membran 15 befindet sich an der der Antriebswelle 17 entgegengesetzten Seite des Gehäuses 16, das dort eine Öffnung 18 aufweist, die durch die Membran 15 verschlossen wird.

Sofern ein Druckunterschied zwischen dem Inneren 19 des Gehäuses 16 des elektromotorischen Antriebs 12 und der Außenseite, d. h. dem Inneren 20 des Getriebegehäuses besteht, wird dieser durch die elastische Membran 15 ausgeglichen. Da kein dauerhafter Druckunterschied zwischen beiden Seiten der Membran 15 entstehen kann, wird verhindert, dass Getriebeöl an irgendeiner Stelle in den Parksperrenaktuator 10 oder in das Gehäuse 16 des elektromotorischen Antriebs 12 gesaugt wird.

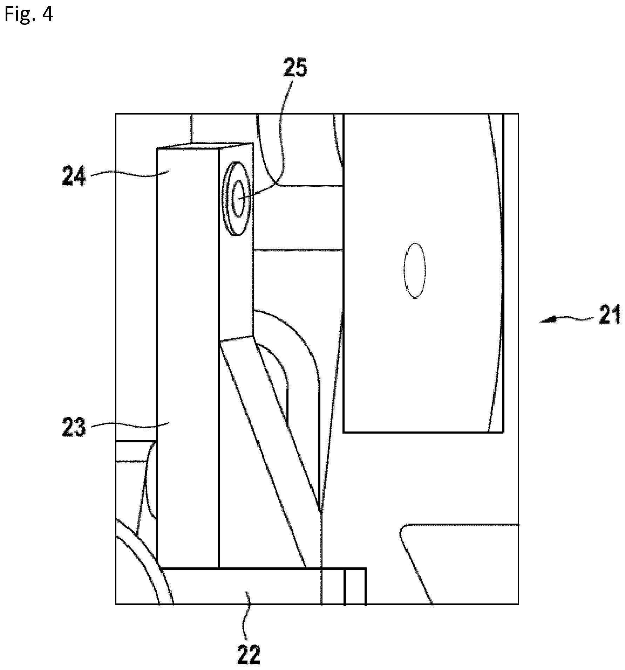

Fig. 4 zeigt ein weiteres Ausführungsbeispiel eines Parksperrenaktuators 21 mit einem Gehäuse 22, von dem lediglich der obere Teil dargestellt ist. Fig. 6 zeigt eine schematische geschnittene Ansicht von Fig. 4. Wie in dem in Fig. 1 und Fig. 5 gezeigten Ausführungsbeispiel ist die Membran 25 an einer gegenüber einem die elektrischen Komponenten enthaltenden Teil des Parksperrenaktuators 21 erhöhten Position im Inneren des Getriebegehäuses 2 angeordnet. Ein Teil des Gehäuses 22 bildet einen ersten Abschnitt, der elektrische Komponenten umfasst. Das Gehäuse 22 weist an seiner Oberseite einen verlängerten zweiten Abschnitt 23 auf, der aus einem rohrförmigen bzw. zylinderförmigen Abschnitt und einem kürzeren dreieckigen Abschnitt zusammengesetzt ist. Im Bereich seines freien Endes 24 ist in dem verlängerten Abschnitt 23 eine Membran 25 angeordnet, die einen Druckausgleich zwischen dem Inneren des Parksperrenaktuators 21 und dem Inneren des Getriebegehäuses, in dem sich der der Parksperrenaktuator 21 befindet, ermöglicht. Der erste Teil des Gehäuses 22 und der verlängerte zweite Abschnitt 23 sind fluidverbunden. Der verlängerte zweite Abschnitt 23, der an seinem Ende die Membran 25 aufweist, ist näherungsweise senkrecht zur Horizontalrichtung angeordnet.

Die schematische Zeichnung Fig. 6 zeigt einen Querschnitt durch das Ausführungsbeispiel von Fig. 4. Grundsätzlich ist Fig. 6 mit Fig. 5 vergleichbar, sodass nachfolgend nur die Unterschiede beschrieben werden. Die Membran 25 befindet sich in einem Bereich zwischen dem Parksperrenaktuator 21 und der Drehachse 30 des Parksperrenrads 5. Somit ist der Parksperrenaktuator 21 einfacher zu installieren im Vergleich zu dem in den Fig. 1 und 5 gezeigten Ausführungsbeispiel, obwohl die Membran 25 dort weiter von dem Getriebeöl 27 entfernt angeordnet ist.

In den beschriebenen Ausführungsbeispielen kann die Membran 25 gegenüber einer inneren Wand des Getriebegehäuses 2 liegen. Somit ist die Membran 25 gegenüber Ölspritzern von Zahnrädern der Getriebeeinrichtung 1 geschützt.

### Bezugszeichenliste

- 1: Getriebeeinrichtung
- 2: Getriebegehäuse
- 3: Zahnrad
- 4: Zahnrad
- 5: Parksperrenrad
- 6: Parksperrenklinke
- 7: Parksperrenaktuator
- 8: Rohrleitung
- 9: oberes Ende
- 10: Parksperrenaktuator
- 11: Gehäuse
- 12: elektromotorischer Antrieb
- 13: Gehäuse
- 14: Antriebswelle
- 15: Membran
- 16: Gehäuse
- 17: Antriebswelle
- 18: Öffnung
- 19: Innere
- 20: Innere
- 21: Parksperrenaktuator
- 22: Gehäuse
- 23: verlängerter Abschnitt
- 24: Ende
- 25: Membran
- 26: Schutzkappe
- 27: Getriebeöl
- 28: Motorgehäuse
- 29: Boden des Getriebegehäuses
- 30: Drehachse des Parksperrenrads
- 31: Motor
- 32: Motorwelle

## Patentansprüche

1. Getriebeeinrichtung (1) für ein elektrisch antreibbares Fahrzeug, umfassend:
- ein Getriebegehäuse (2),
- ein Parksperrenrad (5) und eine zum Blockieren des Parksperrenrads (5) ausgebildete, in dem Getriebegehäuse (2) aufgenommene Parksperre,
- einen elektromotorischen Parksperrenaktuator (7, 10, 21) zum Betätigen der Parksperre,
eine in dem Getriebegehäuse (2) angeordnete, das Innere des Parksperrenaktuators (7, 10, 21) mit dem Inneren des Getriebegehäuses (2) verbindende Druckausgleichsvorrichtung, die
eine Membran (15, 25) aufweist, die dazu ausgebildet ist, einen zwischen beiden Seiten der Membran (15, 25) vorhandenen Druckunterschied auszugleichen, **dadurch gekennzeichnet, dass**
die Membran (15, 25) unter einem Winkel zur Horizontalrichtung angeordnet ist.

2. Getriebeeinrichtung nach Anspruch 1, wobei der Winkel größer als 10°, 20°, 30° oder 40° ist.

3. Getriebeeinrichtung nach Anspruch 1 oder 2, wobei die Membran sich in Vertikalrichtung erstreckt.

4. Getriebeeinrichtung nach einem der vorangehenden Ansprüche, wobei die Membran (15, 25) mit einer Schutzkappe (26) versehen ist.

5. Getriebeeinrichtung nach einem der Ansprüche 1 bis 4, wobei die Membran (25) an einer gegenüber einem die elektrischen Komponenten enthaltenden Teil des Parksperrenaktuators (7, 21) erhöhten Position im Inneren des Getriebegehäuses (2) angeordnet ist.

6. Getriebeeinrichtung nach Anspruch 5, wobei die Membran (25) an einem hohl ausgebildeten, im Betrieb nach oben weisenden verlängerten Abschnitt (23) des Parksperrenaktuators (21) angeordnet ist.

7. Getriebeeinrichtung nach Anspruch 6, wobei ein Gehäuse des Parksperrenaktuators (21) einen ersten Abschnitt aufweist, der elektrische Komponenten des Parksperrenaktuators (21) umfasst und ein hohl ausgebildeter, im Betrieb nach oben weisender verlängerter Abschnitt (23) einen zweiten Abschnitt des Gehäuses des Parksperrenaktuators (21) ausbildet, an dessen Ende die Membran (25) angeordnet ist.

8. Getriebeeinrichtung nach Anspruch 7, wobei der erste Abschnitt und der zweite Abschnitt integral ausgebildet sind.

9. Getriebeeinrichtung nach einem der Ansprüche 1 bis 5, wobei die Membran (25) an einer inneren Wand des Getriebegehäuses (2) angeordnet und über eine Rohrleitung (8) oder einen Schlauch mit dem Parksperrenaktuator (7) verbunden ist.

10. Getriebeeinrichtung nach einem der vorangehenden Ansprüche, wobei sich der Parksperrenaktuator in einem Ölreservoir des Getriebegehäuses (2) befindet und die Membran (25) so angeordnet ist, dass sie sich sowohl während des Fahrbetriebs als auch beim Parken oberhalb des Ölreservoirs befindet.

11. Getriebeeinrichtung nach Anspruch 10, wobei der Parksperrenaktuator (7, 10, 21) sich auf einer Höhe gegenüber einem Boden (29) des Getriebegehäuses (2) befindet, die niedriger als die Höhe der Drehachse (30) des Parksperrenrads (5) gegenüber dem Boden (29) des Getriebegehäuses (2) ist.

12. Getriebeeinrichtung nach Anspruch 11, wobei die Membran (25) sich in einem Bereich zwischen dem Parksperrenaktuator (7) und der Drehachse (30) des Parksperrenrads (5) befindet.

13. Getriebeeinrichtung nach Anspruch 11, wobei die Membran (25) sich in einem Bereich oberhalb der Drehachse (30) des Parksperrenrads (5) befindet.

14. Getriebeeinrichtung nach einem der vorangehenden Ansprüche, wobei die Membran (15, 25) einer inneren Wand des Getriebegehäuses (2) gegenüberliegt.

15. Getriebeeinrichtung nach einem der Ansprüche 1 bis 4, wobei die Membran an einer Axialseite des elektromotorischen Parksperrenaktuators (10) angeordnet ist.
